# EUROPÄISCHE PATENTANMELDUNG

(11) **EP 1 670 134 A1**
(43) Veröffentlichungstag der Anmeldung: **14.06.2006**
(21) Anmeldenummer: 04029172.6
(22) Anmeldetag: 09.12.2004
(51) Int. Cl.: H02P 7/00, B25F 5/00

(54) **Einrichtung und Verfahren zum Steuern eines Motors**

(71) Anmelder: Ferm B.V., Zwolle, 8028 PM (NL)
(72) Erfinder: Woelders, Niels, Zwolle 8028 PM (NL)
(74) Vertreter: Viering, Jentschura & Partner

(57) **Zusammenfassung**

Die Erfindung betrifft eine Einrichtung zum Steuern eines Motors, mit einer Detektionseinheit, mit der ein Blockieren eines Motors mittels Erfassens eines Detektionssignals detektierbar ist, und mit einer Antriebseinheit zum Antreiben des Motors, die mit der Detektionseinheit gekoppelt ist und derart eingerichtet ist, dass im Falle eines detektierten Blockierens des Motors der Motor mit einem gepulsten Antriebssignal angetrieben wird.

## Beschreibung

Die Erfindung betrifft eine Einrichtung zum Steuern eines Motors und eine Vorrichtung zum Steuern eines Motors.

Motoren sind aus vielen Bereichen des täglichen Lebens nicht mehr wegzudenken. Hierzu zählen Verbrennungsmotoren und Elektromotoren, wobei bei Elektromotoren wiederum zwischen Gleichstrommotoren und Wechselstrommotoren unterschieden werden kann.

Unter ungünstigen Bedingungen kann es passieren, dass ein Motor während des Betriebs feststeckt bzw. blockiert. Insbesondere kann die Welle eines solchen Motors blockieren, wenn sie starken mechanischen Belastungen ausgesetzt ist oder in einer Umgebung zum Einsatz kommt, bei der Motoren oder mit einem Motor gekoppelte Komponenten leicht stecken bleiben können. Beispielsweise kann es bei einer motorbetriebenen Bohrmaschine vorkommen, dass der mit der Welle des Elektromotors in der Bohrmaschine gekoppelte Bohrer in einer Wand stecken bleibt und somit blockiert. Ist dies der Fall, so kommt es häufig zu einem Überhitzen und somit zu einer Schädigung des Motors.

Gemäß dem Stand der Technik ist es darüber hinaus in vielen Fällen nicht möglich, einen blockierten Motor wieder in seinen Normalbetrieb zurückzuführen.

Der Erfindung liegt das Problem zugrunde, eine Motor-Steuerung bereitzustellen, mit welcher ein blockierter Motor wieder in seinen Normalzustand zurückgeführt werden kann.

Dieses Problem wird durch eine Einrichtung zum Steuern eines Motors und durch ein Verfahren zum Steuern eines Motors mit den Merkmalen gemäß den unabhängigen Patentansprüchen gelöst.

Die erfindungsgemäße Einrichtung zum Steuern eines Motors enthält eine Detektionseinheit, mit der ein Blockieren eines Motors mittels Erfassens eines Detektionssignals detektierbar ist. Ferner enthält die Einrichtung eine Antriebseinheit zum Antreiben des Motors, die mit der Detektionseinheit gekoppelt ist und derart eingerichtet ist, dass im Falle eines detektierten Blockierens des Motors der Motor mit einem gepulsten Antriebssignal angetrieben wird.

Bei dem erfindungsgemäßen Verfahren zum Steuern eines Motors wird ein Blockieren eines Motors mittels Erfassens eines Detektionssignals detektiert, und es wird im Falle eines detektierten Blockierens des Motors der Motor mit einem gepulsten Antriebssignal angetrieben.

Eine Grundidee der Erfindung ist darin zu sehen, ein Detektionssignal zu erfassen, welches mit hoher Zuverlässigkeit anzeigt, wenn ein Motor in einen Blockadezustand bzw. in einen festgefahrenen oder festgesteckten Zustand geraten ist. Als ein solches Detektionssignal eignet sich insbesondere ein elektrischer Strom zum Antreiben eines Elektromotors, da dieser bei einem Feststecken bzw. Blockieren des Motors häufig einen gegenüber einem Normalzustand hohen Wert einnimmt.

Ist ein solches Blockieren erfindungsgemäß detektiert worden, so wird gemäß der Erfindung der Motor in den Normalzustand, d.h. in einen funktionsfähigen Zustand zurückgebracht, indem der Motor mit einem gepulsten Antriebssignal angetrieben wird. Unter einem "gepulsten" Antriebssignal wird insbesondere ein Antriebssignal verstanden, das über die Zeit hinweg nicht konstant ist, sondern zwischen einem oberen Wert des Antriebssignals und einem unteren Wert des Antriebssignals mit einer vorgebbaren Pulsfrequenz alterniert. Ein solches gepulstes Antriebssignal kann bei einem Gleichstrommotor zum Beispiel die Form eines Rechtecksignals haben. In Unterschied dazu weist das Antriebssignal im blockadefreien Normalbetrieb eines Gleichstrommotors (vor allem bei konstanter Belastung) im Zeitraum einen kontinuierlichen Verlauf auf. In einem Blockadezustand eines Gleichstrommotors erfolgt ein Antrieb des Motors zum Beispiel unter Verwendung von rechteckförmigen Stromimpulsen, bei denen zum Beispiel zeitlich alternierend ein Nullstrom und ein Maximalstrom angelegt wird. Durch das gepulste Antreiben eines blockierten Motors kann in vielen Fällen der Motor aus dem blockierten Zustand wieder in den Normalzustand zurückgebracht werden, indem anschaulich der Motor mit jedem Puls eine Kraft auf die blockierende Umgebung ausübt, die bewirken kann, dass sich der blockierte Motor aus der Blockade löst und somit in dem Normalzustand weiterbetrieben werden kann.

Dadurch, dass der Motor erfindungsgemäß von einen blockierten Zustand in einen Normalzustand zurückgebracht werden kann, ist ein zuverlässiger Überlastschutz für Elektromotoren geschaffen, der die Lebensdauer eines Elektromotors erhöht und eine Schädigung eines Elektromotors in einem blockierten Zustand vermeidet. Ferner kann mit der erfindungsgemäßen Motor-Steuerung ein blockierter Motor aus dem Blockadezustand gelöst werden.

Somit ist eine grundlegende Idee der Erfindung darin zu sehen, dass eine Steuer-Einrichtung und ein Verfahren zum Steuern eines Motors geschaffen sind, welche mittels eines gepulsten Betriebs des Motors in einem Blockadezustand den Motor vor einer Zerstörung insbesondere aufgrund Überhitzens schützen und simultan einen ausreichend hohes Drehmoment zum Lösen des Motors aus dem Blockadezustand aufrechterhalten bzw. bereitstellen. Für diesen Zweck wird das Ereignis einer Blockade oder eines Feststeckens detektiert, indem ein hierauf sensitives Detektionssignal gemessen wird, zum Beispiel dass ein elektrischer Strom zum Antreiben des Motors eine erste Schwelle X überschreitet. Falls ein solches Blockade-Ereignis detektiert wird, kann der Motorstrom derart gesteuert werden, dass er zwischen einem zweiten Schwellwert Y (der vorzugsweise größer ist als der erste Schwellwert X) und Null alterniert. Falls der Motor trotz des gepulsten Betriebes in dem Blockadezustand verbleibt, kann der Pulszyklus wiederholt werden, bis der elektrische Antriebsstrom geringer unter den ersten Schwellwert abfällt, womit angezeigt wird, dass der Motor nicht länger in einer Blockade befindlich ist. Falls der Motor jedoch länger als eine vorgebbare Zeit in dem Blockadezustand verbleibt und/oder wenn eine erfasste Temperatur des Motors einen Temperatur-Schwellwert überschreitet, kann der Motor ausgeschaltet werden, um eine Schädigung aufgrund eines Überhitzens zu vermeiden.

Anders ausgedrückt wird ein Feststecken oder Blockieren der Welle eines Motors oder eines Elements, das mit dieser Welle gekoppelt ist (zum Beispiel ein Bohrer bei einer elektrischen Bohrmaschine) mittels Messens eines geeigneten elektrischen Parameters, vorzugsweise des elektrische Antriebsstroms des Motors, gemessen. Wenn der Antriebsstrom einen Schwellwert X überschreitet (wobei X auf einen jeweiligen Motortyp angepasst ausgewählt werden kann), wird angenommen, dass der Motor in einen Blockierzustand geraten ist. In diesem Fall wird der elektrische Strom nachfolgend auf einen zweiten Schwellwert Y begrenzt. Der Strom mit dem Maximalwert Y wird jedoch nur für eine kurze Zeit angelegt, gefolgt von einem kurzen Ausschalten des Motors bzw. Betreibens des Motors mit einem verringerten Wert des Stroms. Diese Abfolge aus Zeitintervallen mit Stromwerten Y und Z<Y wird bedarfsweise einmal oder mehrere Male wiederholt, so dass ein Pulsstrom und somit ein gepulstes Drehmoment auf den blockierten Motor einwirkt, um den blockierten Motor aus seiner Blockade zu entfernen. Dieses Pulsen wird wiederholt, bis die Blockade nicht mehr vorliegt oder der Motor überhitzt wird.

Zum Beispiel können in einer batteriebetriebenen Bohrmaschine die Schwellwerte X, Y so vorgesehen werden, dass X einen Wert von 60 Ampere und Y einen Wert von 90 Ampere hat. Die Intervalllänge ("Delay") eines Pulses, das heißt der zeitliche Bereich zwischen zwei sukzessiven Strompulsen, wird auf einen verwendeten Motor bzw. eine damit verbundene Nutzvorrichtung abgestimmt. So kann zum Beispiel eine batteriebetriebene Bohrmaschine mit ungefähr 0.01 Hz bis 100 Hz betrieben werden, abhängig von der Geschwindigkeitssteuerung einer batteriebetriebenen Bohrmaschine und einer Batteriespannung (bei einer vollen Batterie wird vorzugsweise eine höhere Frequenz gewählt als bei einer fast leeren Batterie).

Ein wichtiger Aspekt der Erfindung ist daher darin zu sehen, dass mittels Messens eines Antriebsstroms eine Blockade eines Elektromotors festgestellt wird, wenn der Antriebsstrom einen Schwellwert überschreitet. Anstelle eines Antriebsstroms kann auch ein anderer elektrischer Parameter (zum Beispiel eine elektrische Spannung, eine Drehfrequenz der Motorwelle, etc.) gemessen werden. Wird ein Feststecken detektiert, kann eine Sequenz von Antriebsstrompulsen an den Motor angelegt werden.

Vorzugsweise wird das gepulste Betreiben des Motors fortgesetzt, bis die Blockade gelöst ist (was zum Beispiel mittels Messen des dann unter den ersten Schwellwert gefallenen Motorstroms detektiert wird) oder - bei Verharren des Motors in dem Blockadezustand - wenn eine gemessene Motortemperatur eine vorgebbare Temperaturschwelle überschreitet. Ist die Blockade gelöst, so kann der Motor mit dem vor dem Übergang in den Blockadezustand fließenden Antriebsstrom weiterbetrieben werden. Ist die vorgebbare Temperaturschwelle überschritten, so kann der Motor zum Abkühlen abgeschaltet werden.

Die Erfindung ist nicht auf Gleichstrommotoren beschränkt, sondern kann auch leicht auf Wechselstrommotoren angewendet bzw. angepasst werden. Grundsätzlich ist das Prinzip der Erfindung auch auf Verbrennungsmotoren anwendbar, da auch Verbrennungsmotoren in einem Blockadezustand durch einen Pulsbetrieb aus dieser Blockade herausgeführt werden können (zum Beispiel in einem Fahrzeug, das festgesteckt ist).

Die Schwellwerte X und Y, die Frequenz des Pulsens, etc. werden abhängig von dem verwendeten Motor eingestellt.

Vorzugsweise wird bei einem kleinen Motor ein geringerer Wert für X und für Y eingestellt als bei einem größeren Motor, so dass die Werte X, Y abhängig von Größe/Energie/Spannung des Motors eingestellt werden können. Die Frequenz hängt von dem Verhalten des Motors ab, wobei die Länge der Pulse und die Frequenz so bestimmt werden, dass das Drehmoment des Motors möglichst groß ist und das Aufheizen so gering so wie möglich.

Ein wichtiger Vorteil der Erfindung ist darin zu sehen, dass aufgrund des gepulsten Betriebs der Motor auch im festgesteckten Zustand ein ausreichend großes Drehmoment hat, so dass durch das gepulste Betreiben des Motors der Motor in vielen Fällen aus seinem Blockadezustand gelöst werden kann. Anschaulich wird bei jedem Puls ein Drehmomentstoß auf die Umgebung ausgeübt, was zu einem hohen Drehmoment führt, ohne dass der Motor beschädigt wird.

Die erfindungsgemäße Motor-Steuerung kann sowohl mittels eines Computerprogramms, das heißt einer Software, als auch mittels einer oder mehrer spezieller elektrischer Schaltungen, das heißt in Hardware oder in beliebig hybrider Form, das heißt mittels Softwarekomponenten und Hardwarekomponenten, realisiert werden.

Ein typisches Szenario, in dem die erfindungsgemäße Motor-Steuerung vorteilhaft implementiert werden kann, ist zum Beispiel eine batteriebetriebene Bohrmaschine, die zum Bohren eines Lochs in eine Wand verwendet wird. Hierbei kann es vorkommen, dass der Bohrer in einer Wand stecken bleibt und somit der batteriebetriebene Bohrmotor blockiert. Mit der erfindungsgemäßen Pulssteuerung ist es wahrscheinlich, dass der Bohrer wieder frei kommt und dass der Bohrer ohne Zerstörung des Motors wieder seinen normalen Betrieb aufnehmen kann. Wenn allerdings der Motor trotz des gepulsten Betriebs nicht aus der Blockade befreit werden kann, kann bei steigender Temperatur und drohender Zerstörung des Motors der Motor ausgeschaltet werden, um ein Überhitzen zu vermeiden.

Ein anderes Szenario, in dem die Erfindung vorteilhaft verwendet werden kann, sind Drehmaschinen.

Ein noch anderes Szenario, in dem die Erfindung vorteilhaft eingesetzt werden kann, ist das Schrauben einer großen Schraube in eine harte Holzwand oder in ein anderes Material, wobei mit dem pulsierten Betrieb des Bohrers die Schraube in das Holz oder das andere Material eingeführt wird, ohne dass der Motor zerstört wird.

Mittels einer LED (Leuchtdiode)-Anordnung oder eines anderen Anzeigeelements können die Übertemperatur, die Last oder die Blockade des Motors einem Benutzer angezeigt werden. Zum Beispiel kann eine LED zum Anzeigen der Übertemperatur und 5 bis 10 LED's können zum Anzeigen der Last und der Blockade des Motors verwendet werden. Als weiteres Beispiel kann ein Anzeigeelement zum Anzeigen von einem oder mehreren der oben genannten Signale verwendet werden. Weiterhin können die LED-Anordnung und das Anzeigeelement kombiniert werden.

Im Weiteren wird der erfindungsgemäße Überlastschutz eines in einem Blockadezustand befindlichen Motors nochmals beschrieben. Falls der Motor der Maschine permanent blockiert, würde sich der Motor in einer konventionellen Situation immer weiter Aufheizen und dadurch beschädigt oder zerstört werden. Mit der erfindungsgemäßen Schutzeinrichtung beginnt der Motor in einer detektierten Blockadesituation, statt mit einem kontinuierlichen Antriebssignal nunmehr pulsiert betrieben zu werden.

Falls also während des Normalbetriebs eines Motor dieser blockiert, fließt ein sehr großer Strom durch den Motor. In dieser speziellen Situation kann die elektronische Vorrichtung der Erfindung den Strom messen und bedarfsweise begrenzen. Hierbei wird der Motor mit einer regulierten Frequenz alternierend aus- und eingeschaltet, so dass der Motor pulsierend betrieben wird. Es wird eine Blockade festgestellt, falls der Strom über X ansteigt. X ist eine justierbare Variable, die so eingestellt werden kann, dass die Erfordernisse eines mit dem erfindungsgemäßen Überlastschutz betriebenen Gleichstrommotors erfüllt ist. Der Motor wird kurz ausgeschaltet und danach wieder eingeschaltet und mit einem Strom betrieben, der nicht größer als Y ist. Y ist eine justierbare Variable, die für verschiedene Produkte verschieden eingestellt werden kann. Falls der Motor blockiert bleibt, wird der Zyklus aus Ausschalten und Einschalten wiederholt, bis der Strom geringer als der Stromwert X wird. Falls dies der Fall ist, läuft der Motor wieder normal und wird von dem Pulsbetrieb in den ungepulsten Normalbetrieb zurückgebracht. Wenn der Motor zu lange blockiert wird, kann dies zu einem Überhitzen des Motors führen. Droht eine solche Überhitzung, so wird der Motor ausgeschaltet. Nachdem der Motor auf eine akzeptable Temperatur abgekühlt ist, kann der Motor wieder eingeschaltet werden.

Ein wichtiger Vorteil der Erfindung ist, dass der Motor vor einer permanenten Beschädigung geschützt ist und dass der Motor sein Drehmoment beibehält, selbst wenn er nahe an seinen Grenzen betrieben wird. In einer herkömmlichen Situation nimmt das Drehmoment ab, wenn ein Motor an seine Grenzen herangeführt wird.

Somit bewirkt das Ein- und Ausschalten des Motors mit einer regelbaren Frequenz, dass das maximale Drehmoment höher als in einer herkömmlichen Situation ist, in welcher der Motor bis zu einem Feststecken läuft.

Der erfindungsgemäße Überhitzungsschutz verhindert, dass der Motor überhitzt wird oder gar brennt. Dies hat den großen Vorteil, dass der Motor nicht als Folge eines Überhitzens permanent zerstört wird. Der Überhitzungsschutz funktioniert wie folgt: Die Temperatur des Motors kann an einer bestimmten Position möglichst nahe an dem Motor gemessen werden. Falls diese Temperatur zu hoch ist, wird der Motor von der elektrischen Motor-Steuerungs-Einrichtung ausgeschaltet. In dieser Situation kann zum Beispiel eine rote LED anzeigen, dass der Motor aufgrund des Überhitzens ausgeschaltet worden ist. Nach dem Herunterkühlen kann die elektronische Vorrichtung die Maschine zurücksetzen ("Reset"), und die Maschine kann erneut betrieben wird.

Bevorzugte Weiterbildungen der Erfindung ergeben sich aus den abhängigen Ansprüchen.

Die Detektionseinheit kann derart eingerichtet sein, dass mit ihr ein Blockieren eines Motors mittels Erfassens eines elektrischen Detektionssignals detektierbar ist. Dieses elektrische Detektionssignal kann der Wert eines elektrischen Antriebsstroms des Motors sein.

Die Detektionseinrichtung kann derart eingerichtet sein, dass ein Blockieren des Motors festgestellt wird, wenn das Detektionssignal einen vorgebbaren ersten Schwellwert überschreitet. Ein solcher Schwellwert kann benutzerdefiniert bzw. anwendungsdefiniert auf einen speziellen Motor angepasst werden, und so gewählt werden, dass bei Strömen unterhalb des ersten Schwellwerts ein Blockieren üblicherweise nicht auftritt. Ein Blockieren führt zu einem Strom, der oberhalb des Schwellwerts liegt.

Das gepulste Antriebssignal kann eine vorgebbare Amplitude aufweisen. Diese Amplitude kann größer gewählt werden als der erste Schwellwert, da die Temperaturbelastung trotz des höheren Wertes geringer als bei einem Dauerbetrieb mit dem konstanten ersten Schwellwert. Dies beruht darauf, dass zwischen benachbarten Pulsen der Motor kurz ausgeschaltet wird.

Es kann bei der Einrichtung der Erfindung eine Temperaturerfasseinheit vorgesehen sein, die zum Erfassen der Temperatur des Motors und zum Bereitstellen eines die Temperatur des Motors kodierenden Signals an die Antriebseinheit eingerichtet ist. Ein solcher Temperatursensor kann nahe dem Motor angebracht werden und ist zum Messen der Temperatur des Motors eingerichtet. Ein Signal, welches eine Information über die Temperatur des Motors enthält, kann dann von der Temperaturerfasseinheit der Antriebseinheit zugeführt werden, so dass die Antriebseinheit basierend auf dieser Information entscheiden kann, ob der Motor aufgrund einer möglicherweise drohenden Überhitzung ausgeschaltet werden soll oder nicht.

Die Antriebseinheit kann derart eingerichtet sein, dass sie den mit dem gepulsten Antriebssignal betriebenen Motor ausschaltet, wenn die Temperatur des Motors einen zweiten Schwellwert überschreitet.

Bei der Einrichtung kann die Antriebseinheit derart eingerichtet sein, dass sie den bei einem detektierten Blockieren mit dem gepulsten Antriebssignal betriebenen Motor ungepulst antreibt, sobald die Detektionseinheit detektiert, dass der Motor nicht mehr blockiert. Wenn also mittels der Detektionseinheit festgestellt wird, dass der Motorstrom den ersten Schwellwert unterschreitet und somit eine Blockade nicht mehr vorliegt, kann der gepulste Betrieb beendet werden und der Motor in sein Normalbetrieb mit einem kontinuierlichen Antriebssignal zurückgeführt werden.

Die Antriebseinheit kann derart eingerichtet sein, dass sie im Falle eines detektierten Blockierens des Motors den Motor mit einem gepulsten Antriebssignal mit einer Pulsfrequenz von 0.01 Hz bis 100 Hz antreibt, vorzugsweise zwischen 0.5 Hz und 2 Hz, weiter vorzugsweise in einem Bereich nahe 1 Hz.

Die Einrichtung kann eine Anzeigeeinrichtung aufweisen, die derart eingerichtet ist, dass sie das Blockieren, eine Last oder eine Übertemperatur des Motors anzeigt. Die Anzeigeeinrichtung kann derart eingerichtet sein, dass sie das Blockieren, die Last oder die Übertemperatur des Motors mittels einer Lampe anzeigt. Die Anzeigeeinrichtung kann derart eingerichtet sein, dass sie das Blockieren, die Last oder die Übertemperatur des Motors mittels eines Anzeigeelements anzeigt. Zum Beispiel kann eine LED zum Anzeigen der Übertemperatur verwendet werden und 5 bis 10 LED's können zum Anzeigen der Last und der Blockade des Motors verwendet werden. Als weiteres Beispiel kann ein Anzeigeelement zum Anzeigen von einem oder mehreren der oben genannten Signale verwendet werden. Weiterhin können die LED-Anordnung und das Anzeigeelement kombiniert werden. Die LED's und das Anzeigeelement können eine Anzeigeeinrichtung bilden, wobei 1 LED 20% des maximalen Stroms, 1 LED 40% desselben usw. anzeigt, bzw. das Anzeigeelement einen aktuellen Wert des Stroms anzeigt.

Die Einrichtung kann zum Steuern eines Elektromotors, insbesondere zum Steuern eines Gleichstrommotors, eingerichtet sein.

Insbesondere kann die Einrichtung zum Steuern eines Motors einer Bohrer-Vorrichtung (zum Beispiel eine Bohrmaschine), einer Dreh-Vorrichtung (zum Beispiel eine Drehbank), einer Schraub-Vorrichtung (zum Beispiel ein motorbetriebener Schraubenzieher), einer Antriebs-Vorrichtung (zum Beispiel ein Förderband) oder einer Rüttel-Vorrichtung (zum Beispiel eine Sieb-Vorrichtung) eingerichtet sein.

Wenngleich diese Ausgestaltungen unter Bezugnahme auf die Einrichtung zum Steuern eines Motors beschrieben worden sind, gelten diese Ausgestaltungen auch für das erfindungsgemäße Verfahren zum Steuern eines Motors.

Ausführungsbeispiele der Erfindung sind in den Figuren dargestellt und werden im Weiteren näher erläutert.

Es zeigen:
- Figur 1: ein Diagramm, das ein Pulsbetrieb eines blockierten Motors gemäß einem ersten Ausführungsbeispiel der Erfindung zeigt,
- Figur 2: ein Diagramm, das ein Pulsbetrieb eines blockierten Motors gemäß einem zweiten Ausführungsbeispiel der Erfindung zeigt,
- Figur 3: eine Anordnung mit einer erfindungsgemäßen Einrichtung zum Steuern eines Motors,
- Figur 4: ein Flussdiagramm gemäß einem Verfahrens zum Steuern eines Motors gemäß einem Ausführungsbeispiel der Erfindung,
- Figur 5: ein Diagramm, das die Funktionalität einer Temperatursteuerung der Erfindung zeigt.

Gleiche oder ähnliche Komponenten in unterschiedlichen Figuren sind mit gleichen Bezugsziffern versehen.

Die Darstellungen in den Figuren sind schematisch und nicht maßstäblich.

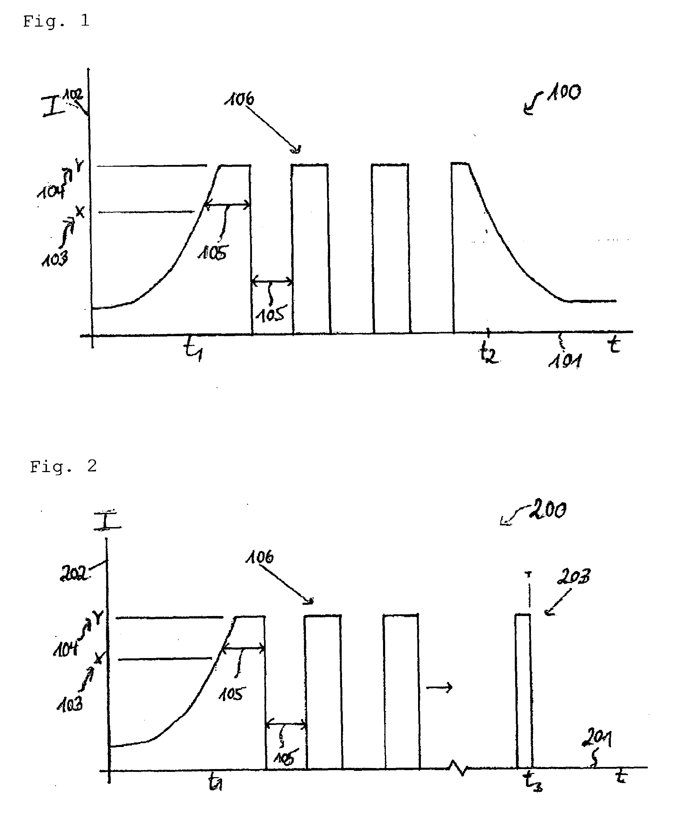

Im Weiteren wird bezog nehmend auf **Fig.1** ein Diagramm 100 beschrieben, anhand welchem ein Pulsbetrieb eines Verfahrens zum Steuern eines Motors gemäß einem ersten Ausführungsbeispiel der Erfindung beschrieben wird.

Das Diagramm 100 enthält eine Zeitachse 101, entlang welcher die Zeit aufgetragen ist, über welche hinweg ein Elektromotor gesteuert bzw. betrieben wird. Entlang einer Stromachse 102 ist der Wert eines elektrischen Antriebsstroms aufgetragen, den eine Antriebseinheit der Motor-Steuerung dem Motor bereitstellt, um diesen zu betreiben.

Zu einem Zeitpunkt t1 überschreitet der Strom durch den Motor einen ersten Stromschwellwert 103 X. Bei Überschreiten des Stromwerts X wird angenommen, dass der Motor in einen Blockadezustand geraten ist. Dies wird von der Detektionseinheit der erfindungsgemäßen Einrichtung zum Steuern eines Motors detektiert. Daraufhin steuert die Antriebseinheit den Motor derart, dass der Motor mit einem gepulsten Antriebssignal gemäß dem Pulsbetrieb 106 betrieben wird. In diesem Pulsbetrieb 106 alterniert der Strom des Motors zwischen einem zweiten Stromschwellwert 104 Y, der größer ist als der erste Stromschwellwert 103 X und einem Strom I=0. Die Zeitdauer eines Pulses, das heißt die Pulsdauer 105, ist ebenfalls in Fig.1 eingezeichnet. Zu einem Zeitpunkt t2 ist der Strom durch den Motor unter den ersten Stromschwellwert 103 abgefallen. Daher steuert die Antriebseinheit den Motor derart, dass dieser wieder in den Normalbetrieb, das heißt in den nichtgepulsten kontinuierlichen Antriebsbetrieb mit einem im Gleichgewichtszustand konstanten Strom zurückgeführt wird.

Im Weiteren wird Bezug nehmend auf **Fig.2** ein Diagramm 200 beschrieben, bei dem ein Verfahren zum Steuern eines Motors gemäß einem anderen Ausführungsbeispiel der Erfindung beschrieben wird.

Das Diagramm 200 zeigt wiederum eine Zeitachse 201, entlang welcher eine Zeit aufgetragen ist, über welche hinweg ein Motor erfindungsgemäß gesteuert wird. Entlang einer Stromachse 202 ist der elektrische Strom I aufgetragen, der durch den Gleichstrommotor fließt und diesen antreibt.

Zu einem Zeitpunkt t1 überschreitet der Strom durch den Motor den ersten Stromschwellwert 103, woraus die Einrichtung zum Steuern eines Motors schließt, dass der Motor in einen blockierten Zustand übergegangen ist. Daraufhin wird von der Motor-Steuerung der maximal zusätzliche Strom durch den Motor auf den zweiten Stromschwellwert 104 Y nach oben hin begrenzt. Der Motor beginnt einem Pulsbetrieb 106, das heißt eine alternierende Abfolge von Zeiträumen 105 ("Delay"), in welchen ein Gleichstromwert Y durch den Motor fließt, und Zeiträumen 105, in denen ein Gleichstrom I=0 durch den Motor fließt.

Anders als gemäß Fig.1 ist gemäß Fig.2 nicht gelungen, den Motor bis zu einem Zeitpunkt t3 durch einen Pulsbetrieb aus dem Blockadezustand herauszuführen. Zu einem Zeitpunkt t3 detektiert eine Temperaturerfasseinheit, die mit einem Motor gekoppelt ist, dass die Temperatur des Motor einen vorgegebenen maximal erlaubten Grenzwert überschritten hat. Da aufgrund der Temperaturüberschreitung eine Zerstörung des Motors droht, wird zum Zeitpunkt t3 der Pulsbetrieb ausgeschaltet und der Motor zum Abkühlen ausgeschaltet. Erst wenn die Temperatur unter die kritische Grenztemperatur gefallen ist, nimmt die Motor-Steuerung der Erfindung den Pulsbetrieb wieder auf, um den Motor aus der Blockade zu befreien.

Mit anderen Worten zeigt Fig.2 den Zeitverlauf in einem Szenario, bei dem ein Motor über einen längeren Zeitraum hinweg blockiert bleibt. Durch das lange Pulsen erwärmt sich der Motor sukzessive, und nachdem der Motor die vorgegebene Grenztemperatur überschritten hat, wird der Motor ausgeschaltet, und die Motortemperatur kann auf einem definierten Wert abkühlen, bevor das System zurückgesetzt wird und der Motor wieder eingeschaltet werden kann.

Der Motor kann auch mit dem gepulsten Antriebssignal gemäß dem Pulsbetrieb 106 alleine betrieben werden, ohne dass eine Temperaturerfasseinheit zum Erfassen einer Temperaturüberschreitung verwendet wird. Ebenso kann die Temperaturerfasseinheit zum Erfassen einer Temperaturüberschreitung alleine verwendet werden, ohne dass der Motor im Pulsbetrieb 106 betrieben wird.

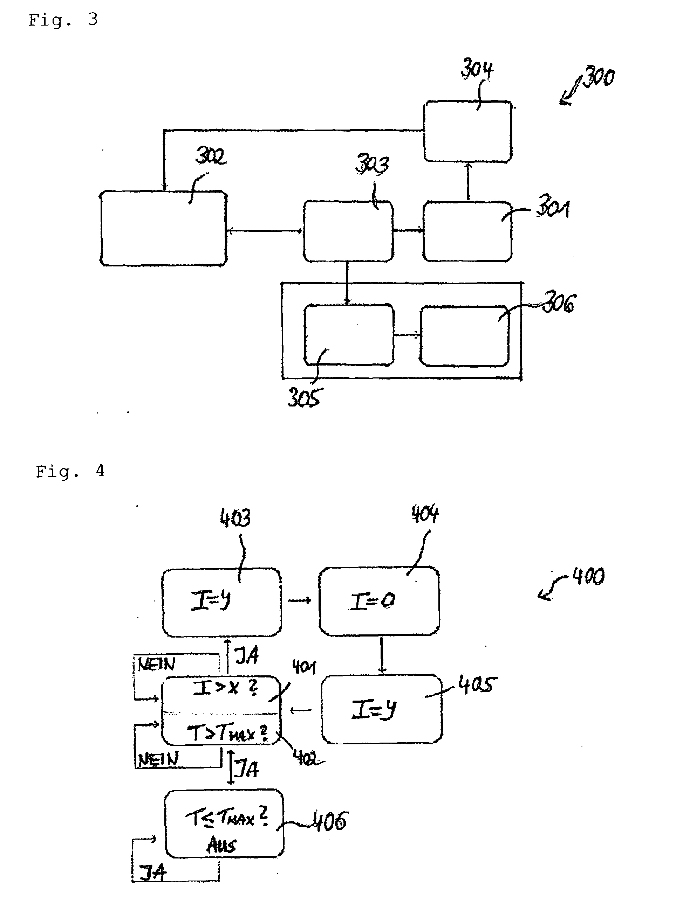

Im Weiteren wird Bezug nehmend auf **Fig.3** eine Motor-Anordnung 300 beschrieben, in der eine erfindungsgemäße Motor-Steuerung implementiert ist.

Die Motor-Anordnung 300 enthält einen Motor 301 einer motorbetriebenen batteriebetriebenen Bohrmaschine. An dem Motor ist ein Temperatursensor 304 angebracht, der die Temperatur des Motors 301 misst. Diese Temperatur kann von dem Temperatursensor 304 der Motorsteuer-Einrichtung 302 zugeführt werden. Ein Switch 303 dient als ein Schalterelement bzw. als ein Strom-Feedback-Element, und meldet der Motorsteuer-Einrichtung 302 einen aktuellen Stromwert.

Mittels einer LED (Leuchtdiode)-Anordnung oder eines anderen Anzeigeelements können die Übertemperatur, die Last oder die Blockade des Motors einem Benutzer angezeigt werden. Zum Beispiel kann eine LED zum Anzeigen der Übertemperatur und 5 bis 10 LED's können zum Anzeigen der Last und der Blockade des Motors verwendet werden. Als weiteres Beispiel kann ein Anzeigeelement zum Anzeigen von einem oder mehreren der oben genannten Signale verwendet werden. Weiterhin können die LED-Anordnung und das Anzeigeelement kombiniert werden. Die LED's und das Anzeigeelement können eine Anzeigeeinrichtung bilden, wobei 1 LED 20% des maximalen Stroms, 1 LED 40% desselben usw. anzeigt, bzw. das Anzeigeelement einen aktuellen Wert des Stroms anzeigt.

Somit wird der Strom durch den Motor 301 innerhalb des Switch 303 gemessen (wobei der Switch vorzugsweise ein Feldeffekttransistor, "Smart FET", ist). Das Ergebnis dieser Messung wird der Motor-Steuerung 302 bereitgestellt, und die Motor-Steuerung 302 treibt den Switch 303 gemäß den gemessenen Ergebnissen des Switch 303. In dem Motor wird die Temperatur zum Beispiel in der Nähe der Kohlenbürsten ("carbon brush) gemessen, und das Messergebnis wird der Steuereinheit 302 zugeführt. Falls die Temperatur zu hoch wird, schaltet die Steuereinheit 302 den Switch 303 aus. Die Messung steuert ferner eine oder mehrere LEDs 306 zur Anzeige des Stroms, welcher durch den Motor 301 fließt.

Im Weiteren wird Bezug nehmend auf **Fig.4** ein Ablaufdiagramm 400 beschrieben, das die Funktionsweise der erfindungsgemäßen Motor-Steuerung beschreibt.

In dem Ablaufdiagramm 400 wird im Normalbetrieb des Motors mit kontinuierlichem Antriebsstrom innerhalb der Motor-Steuerung eine erste Abfrage 401 und eine zweite Abfrage 402 durchgeführt, während der Motor in einem eingeschalteten Zustand ist.

Bei einer ersten Abfrage 401 wird geprüft, ob der gegenwärtige Stromfluss durch den Motor größer als ein erster Stromschwellwert X ist. Solange dies nicht der Fall ist, das heißt solange die kritische Stromstärke X nicht überschritten ist, und somit eine Blockade als nicht vorliegend angenommen wird, wird die erste Abfrage 401 in einem gewissen Zeitabstand wiederholt. Wird dagegen festgestellt, dass die erste Abfrage 401 positiv ist und der Motorstrom den Wert X überschritten hat, so wird von einem Blockadezustand des Motors ausgegangen. Dann wird ein gepulster Betriebszyklus des Motors eingeleitet, der eine erste Delay-Phase 403, eine erste Motor-Aus-Phase 404 und eine zweite Delay-Phase 405 enthält. Während der ersten Delay-Phase 403 wird der Motor auf einem zweiten Stromschwellwert 104 Y>X betrieben, nachfolgend wird innerhalb des Pulsbetriebs der Motor für eine Pulsdauer 105 auf einem Strom 1=0 betrieben, und in einer nachfolgenden zweiten Delay-Phase 405 wird der Motor wiederum auf den zweiten Stromschwellwert 104 Y gesetzt. Somit kennzeichnen die Phasen 403 bis 405 den Pulsbetrieb 106 in Fig.3, wobei jede dieser Phasen 403 bis 405 für eine Zeitdauer des Pulsdauer 105 aufrechterhalten bleibt.

Gemäß einer zweiten Abfrage 402 überprüft die Motor-Steuerung in regelmäßigen zeitlichen Abständen, ob die Temperatur T des Motors, gemessen mittels der Temperaturerfasseinheit 304, eine maximal zulässige Grenztemperatur T_{MAX} überschritten hat. Solange dies nicht der Fall ist, wird davon ausgegangen, dass der Motor in einem nicht überhitzten Zustand ist.

Überschreitet die gemessene Temperatur die maximal zulässige Temperatur T_{MAX}, so wird das System von der Motor-Steuerung in einen Motor-Aus-Zustand 406 gebracht, in dem der Motor bis auf weiteres dauerhaft ausgeschaltet bleibt. Während das System in dem Motor-Aus-Zustand 406 verharrt, wird sukzessive abgefragt, ob die Temperatur T mittlerweile unter die maximal zulässige Temperatur T_{MAX} abgefallen ist. Ist dies der Fall, so wird das System in einen Zustand zurückgeführt, in dem der Motor eingeschaltet ist, und in dem die erste Abfrage 401 und die zweite Abfrage 402 wiederum durchgeführt werden.

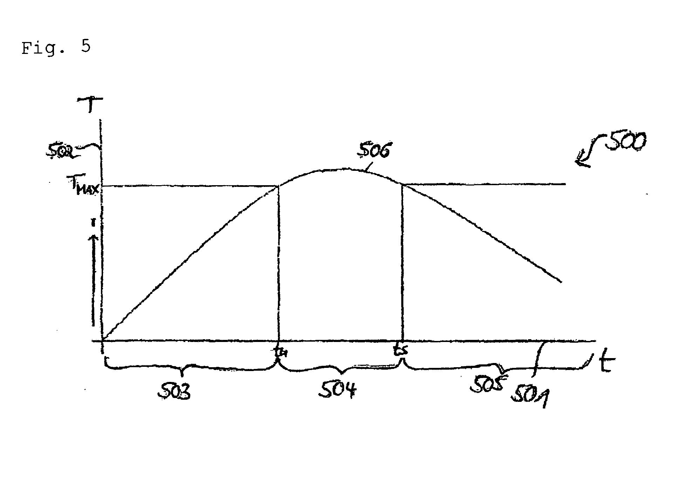

Im Weiteren wird anhand eines Diagramms 500 aus **Fig.5** die Funktionalität einer Temperaturerfasseinrichtung der Erfindung näher erläutert.

In Fig.5 ist ein Diagramm 500 gezeigt, bei dem entlang einer Zeitachse 501 ein Zeitverlauf einer Temperaturkurve 506 gezeigt ist. Die Temperaturkurve 506 zeigt, dass vor einem Zeitpunkt t4 die Temperatur unterhalb einer erlaubten Maximaltemperatur T_{MAX} ist, so dass in dieser Phase der Motor eingeschaltet ist, siehe erste Motor-Ein-Phase 503. Zu einem Zeitpunkt t4 überschreitet die Motortemperatur 506 den Schwellwert T_{MAX}, so dass der Motor ausgeschaltet wird, um ihn vor einer Überhitzung und somit Schädigung zu schützen, siehe Motor-Aus-Phase 504. Nach dem Ausschalten des Motors kühlt dieser langsam ab und unterschreitet ab dem Zeitpunkt t5 die Maximaltemperatur T_{MAX}. Daher wird zu dem Zeitpunkt t5 von der Motor-Steuerung der Motor wieder eingeschaltet, siehe zweite Motor-Ein-Phase 505.

### Bezugszeichenliste

- 100: Diagramm
- 101: Zeitachse
- 102: Stromachse
- 103: erster Stromschwellwert
- 104: zweiter Stromschwellwert
- 105: Pulsdauer
- 106: Pulsbetrieb
- 200: Diagramm
- 201: Zeitachse
- 202: Stromachse
- 203: Ausschalten
- 300: Motor-Anordnung
- 301: Motor
- 302: Motorsteuer-Einrichtung
- 303: Switch
- 304: Temperatursensor
- 305: Messeinheit
- 306: Leuchtdiode
- 400: Ablaufdiagramm
- 401: erste Abfrage
- 402: zweite Abfrage
- 403: erste Delay-Phase
- 404: Motor-Aus-Phase
- 405: zweite Delay-Phase
- 406: Motor-Aus-Zustand
- 500: Diagramm
- 501: Zeitachse
- 502: Temperaturachse
- 503: erste Motor-Ein-Phase
- 504: Motor-Aus-Phase
- 505: zweite Motor-Ein-Phase
- 506: Temperaturkurve

## Patentansprüche

1. Einrichtung zum Steuern eines Motors,
• mit einer Detektionseinheit, mit der ein Blockieren eines Motors mittels Erfassens eines Detektionssignals detektierbar ist;
• mit einer Antriebseinheit zum Antreiben des Motors, die mit der Detektionseinheit gekoppelt ist und derart eingerichtet ist, dass im Falle eines detektierten Blockierens des Motors der Motor mit einem gepulsten Antriebssignal angetrieben wird.

2. Einrichtung nach Anspruch 1,
bei der die Detektionseinheit derart eingerichtet ist, dass mit ihr ein Blockieren eines Motors mittels Erfassens eines elektrischen Detektionssignals detektierbar ist.

3. Einrichtung nach Anspruch 2,
bei der das elektrische Detektionssignal der Wert eines elektrischen Antriebsstroms des Motors ist.

4. Einrichtung nach einem der Ansprüche 1 bis 3,
bei der die Detektionseinheit derart eingerichtet ist, dass ein Blockieren des Motors festgestellt wird, wenn das Detektionssignal einen vorgebbaren ersten Schwellwert überschreitet.

5. Einrichtung nach einem der Ansprüche 1 bis 4,
bei der das gepulste Antriebssignal eine vorgebbare Amplitude aufweist, die einen größeren Wert aufweist als der erste Schwellwert.

6. Einrichtung nach einem der Ansprüche 1 bis 6,
mit einer Temperaturerfasseinheit, die zum Erfassen der Temperatur des Motors und zum Bereitstellen eines die Temperatur des Motors kodierenden Signals an die Antriebseinheit eingerichtet ist.

7. Einrichtung nach Anspruch 6,
bei der die Antriebseinheit derart eingerichtet ist, dass sie den mit dem gepulsten Antriebssignal betriebenen Motor ausschaltet, wenn die Temperatur des Motors einen zweiten Schwellwert überschreitet.

8. Einrichtung nach einem der Ansprüche 1 bis 7,
bei der die Antriebseinheit derart eingerichtet ist, dass sie den bei einem detektierten Blockieren mit dem gepulsten Antriebssignal betriebenen Motor ungepulst antreibt, sobald die Detektionseinheit detektiert, dass der Motor nicht mehr blockiert.

9. Einrichtung nach einem der Ansprüche 1 bis 8,
bei der die Antriebseinheit derart eingerichtet ist, dass im Falle eines detektierten Blockierens der Motor mit einem gepulsten Antriebssignal mit einer Pulsfrequenz von 0.01 Hz bis 100 Hz angetrieben wird.

10. Einrichtung nach einem der Ansprüche 1 bis 9,
mit einer Anzeigeeinrichtung, die derart eingerichtet ist, dass sie das Blockieren, eine Last oder eine Übertemperatur des Motors anzeigt.

11. Einrichtung nach Anspruch 10,
bei der die Anzeigeeinrichtung derart eingerichtet ist, dass sie das Blockieren, die Last oder die Übertemperatur des Motors mittels einer Lampe anzeigt.

12. Einrichtung nach Anspruch 10,
bei der die Anzeigeeinrichtung derart eingerichtet ist, dass sie das Blockieren, die Last oder die Übertemperatur des Motors mittels eines Anzeigeelements anzeigt.

13. Einrichtung nach einem der Ansprüche 1 bis 12, eingerichtet zum Steuern eines Elektromotors.

14. Einrichtung nach einem der Ansprüche 1 bis 13, eingerichtet zum Steuern eines Gleichstrommotors.

15. Einrichtung nach einem der Ansprüche 1 bis 14, eingerichtet zum Steuern eines Motors
• einer Bohrer-Vorrichtung;
• eine Dreh-Vorrichtung;
• einer Schraub-Vorrichtung;
• einer Antriebs-Vorrichtung, oder
• einer Rüttel-Vorrichtung.

16. Verfahren zum Steuern eines Motors,
bei dem
• ein Blockieren eines Motors mittels Erfassens eines Detektionssignals detektiert wird;
• im Falle eines detektierten Blockierens des Motors der Motor mit einem gepulsten Antriebssignal angetrieben wird.
